# EUROPEAN PATENT SPECIFICATION

(11) **EP 0 588 029 B1**
(45) Date of publication and mention of the grant of the patent: **11.09.1996**
(21) Application number: 93111903.6
(22) Date of filing: 26.07.1993
(51) Int. Cl.: C08L 23/10

(54) **Calendrable modified propylenic plastics material weldable at high frequency**
Hochfrequenzschweissbare, kalandrierbare modifizierte Polypropylen-Kunststoffmasse
Composition de polypropylène modifié, calandrable et soudable à haute fréquence

(30) Priority: 03.09.1992 IT MI922052
(43) Date of publication of application: 23.03.1994
(73) Proprietor: RESINE SINTETICHE ADAMOLI S.p.A., I-21040 Carnago (Varese) (IT)
(72) Inventor: Mason, Renato Primo, I-21043 Castiglione Olona (Varese) (IT)
(74) Representative: Giambrocono, Alfonso, Dr. Ing.

(56) References cited:
- WO-A-86/07010
- WO-A-86/07600

## Description

This invention relates to a calendrable propylenic plastics material weldable at high frequency.

Propylenic plastics materials which have been modified in order to make them calendrable, ie transformable into sheets or plates by the action of conventional calenders, have been known for some time. The product leaving the calender is not however weldable by the well known high frequency method, even though this method is simple to operate and is hence used by the majority of processors. There is therefore a current requirement for a semi-finished propylenic product (sheets, plates and films) which in addition to possessing the valued characteristics of propylene can also be high-frequency welded.

This requirement is satisfied according to the invention by a calendrable polypropylene-based material comprising nitrile rubber provided said material does not contain a crosslinking agent.

Nitrile rubber is a known synthetic rubber formed by polymerizing acrylonitrile with butadiene.

The composite calendrable polypropylene/nitrile rubber material has been found to be high-frequency weldable.

According to another aspect of the invention the calendrable propylene and the nitrile rubber are mixed in the form of powders in a conventional slow mixer at ambient temperature until intimate mixing of these two components plus other components is achieved.

The resultant powder is processed in a calendering line formed from a conventional roller mixer, an extruder (also conventional) and a calender (also conventional) to obtain the required semi-finished product.

The ingredients associated with the two basic components (calendrable propylene plastics material and nitrile rubber) in the composition are: stabilizers to give the resultant product adequate thermo-oxidative stability, lubricants and, if appropriate or necessary, pigments.

The nitrile rubber preferably contains an acrylonitrile quantity of about 30-40%, but this percentage is not critical and can be decided case by case when about to prepare the product.

The weight ratio of propylene plastics material to nitrile rubber can be varied within a reasonably wide range and as a practical rule it can be stated that the smaller the thickness of the product leaving the calender the greater the required nitrile rubber content.

If for example a calendrable propylene plastics material/nitrile rubber weight ratio of 3 is suitable for preparing a film or sheet with a thickness of 0.1 mm, a higher ratio can be used for a material of greater thickness. For example to produce a sheet of 0.2 thickness a nitrile rubber quantity of 15-20% of the total weight of calendrable propylene plastics material plus nitrile rubber is sufficient.

The invention will be more apparent from the following examples, which are given by way of example only and are therefore not limitative of the scope of the invention.

### EXAMPLE 1

The following components were mixed together for 20 minutes at ambient temperature in a conventional slow mixer:
1) calendrable isotactic propylene plastics material (produced by Himont and sold under the name of HI-FAX Fx 7036 XCP) 80 kg
2) nitrile rubber containing 33% of acrylonitrile (produced by Goodyear and sold under the name of CHEMIGUN P90) 20 kg
3) stabilizer: tetra(2,4-di-tert-butylphenyl)4,4'-biphenylidene-diphosphite (produced by Sandos and sold under the name of Sandostab P-EPQ) 0.200 kg
4) stabilizer: prepared by the butylation of paracresol and dicyclopentadiene (produced by Goodyear and sold under the name of Wing Stay L) 0.600 kg
5) lubricant: calcium hydroxystearate 0.200 kg
6) lubricant: stearic acid 0.200 kg

The powder obtained in this manner is processed in a calendering line formed from a double roller mixer, extruder and calender, to obtain a sheet of 0.2 mm thickness. The extrusion and calendering temperature is set at 160-170°C.

The resultant sheet is subjected to high-frequency welding with satisfactory results.

### EXAMPLE 2

Operating as described in Example 1 and using the same calendering line (but set at an average temperature of about 190-200°C) a film or sheet of 0.1 mm thickness was obtained starting from the following composition:
a) calendrable propylene plastics material 75 kg
b) nitrile rubber 25 kg
c) Sandostab P-EPQ 0.4 kg
d) Wing Stay L 0.6 kg
e) Wing Stay 29 0.6 kg
   (this latter is a stabilizer produced by Goodyear and sold under the said name, it consisting of paraorientated styrenated diphenyl-amines)
f) calcium hydroxystearate 0.2 kg
g) stearic acid 0.2 kg
h) modifier EPR-9 4 kg
   (this latter is an acrylic modifier which rheologically modifies the mixture and is produced and marketed by ROHM & HASS)
i) predispersed polyethylene-based pigment Bianco 11.700, produced and marketed by VIBA 6 kg

This latter white pigment can be replaced by other predispersed pigments of a quantity and tonality depending on the colour to be achieved.

## Claims

1. A high-frequency weldable plastics material, preferably in the form of a sheet, film or plate, characterised by comprising calendrable propylene polymers and nitrile rubber as its basic components under the proviso that the plastic material does not contain a crosslinking agent.

2. A material as claimed in claim 1, characterised in that the calendrable propylene polymers/nitrile rubber ratio is between 5.7:1 and 3:1.

3. A material as claimed in claim 1, characterised by comprising stabilizers, lubricants and pigments.

4. A material as claimed in claim 1, characterised in that the propylene polymers is of isotactic type.

5. A material as claimed in claim 1, characterised in that the nitrile rubber contains between 30% and 40%, and preferably 33%, of acrylonitrile.

## Patentansprüche

1. Ein mittels Hochfrequenz schweißbares Kunststoffmaterial, das vorzugsweise in Form eines Blattes, einer Folie oder einer Platte vorliegt, dadurch gekennzeichnet, daß es kalandrierbares Propylenpolymer und Nitrilkautschuk als seine Basiskomponenten umfaßt, mit der Maßgabe, daß das Kunststoffmaterial kein Vernetzungsmittel enthält.

2. Material nach Anspruch 1, dadurch gekennzeichnet, daß das Verhältnis von kalandrierbarem Propylenpolymer zu Nitrilkautschuk zwischen 5,7 : 1 und 3 : 1 liegt.

3. Material nach Anspruch 1, dadurch gekennzeichnet, daß es Stabilisatoren, Schmiermittel und Pigmente umfaßt.

4. Material nach Anspruch 1, dadurch gekennzeichnet, daß das Propylenpolymer vom isotaktischen Typ ist.

5. Material nach Anspruch 1, dadurch gekennzeichnet, daß der Nitrilkautschuk zwischen 30 % und 40 % und vorzugsweise 33 % Acrylnitril enthält.

## Revendications

1. Matière plastique soudable à haute fréquence, de préférence sous forme de feuille, de film, de plaque ou similaire, caractérisée en ce qu'elle comprend en tant que composants de base des polymères de propylène et du caoutchouc nitrile calandrables, sous réserve que la matière plastique ne contienne pas d'agent réticulant.

2. Matière selon la revendication 1, caractérisée en ce que le rapport entre les polymères de propylène et le caoutchouc nitrile calandrables est compris entre 5,7:1 et 3:1.

3. Matière selon la revendication 1, caractérisée en ce qu'elle comprend des stabilisants, des lubrifiants et des pigments.

4. Matière selon la revendication 1, caractérisée en ce que les polymères de propylène sont de type isotactique.

5. Matière selon la revendication 1, caractérisée en ce que le caoutchouc nitrile contient entre 30 et 40 %, et de préférence 33 %, d'acrylonitrile.
